# EUROPÄISCHE PATENTSCHRIFT

(11) **EP 2 186 455 B1**
(45) Veröffentlichungstag und Bekanntmachung des Hinweises auf die Patenterteilung: **10.04.2013**
(21) Anmeldenummer: 09173946.6
(22) Anmeldetag: 23.10.2009
(51) Int. Cl.: A47J 31/44

(54) **Getränkeautomat**
Drinks machine
Automate à boissons

(30) Priorität: 07.11.2008 DE 102008043571
(43) Veröffentlichungstag der Anmeldung: 19.05.2010
(73) Patentinhaber: BSH Bosch und Siemens Hausgeräte GmbH, 81739 München (DE)
(72) Erfinder: Perschl, Christoph, 83373, Taching am See (DE)

(56) Entgegenhaltungen:
- DE-U1- 29 810 291

## Beschreibung

Die vorliegende Erfindung betrifft einen Getränkeautomaten, insbesondere einen Kaffeeautomaten, mit einem höhenverstellbaren Getränkeauslauf gemäß dem Oberbegriff des Anspruchs 1.

Ein derartiger Getränkeautomat mit einem höhenverstellbaren Auslauf ist beispielsweise aus der DE 20 2004 020 916 U1 bekannt, ebenso wie aus der DE 200 17 859 U1. Beiden Getränkeautomaten ist dabei gemein, einen Getränkeauslauf einfach an unterschiedlich große Getränkegefäße, wie beispielsweise Gläser oder Tassen, anpassen zu können. Die Höhenverstellung des Getränkeauslaufs ist dabei auch von Vorteil, wenn es darum geht, Verunreinigungen im Befüllbereich des Getränkebehälters zu vermeiden, wie diese beispielsweise bei einem zu hoch montierten statischen Getränkeauslauf beim Befüllen einer kleinen Espressotasse auftreten können. Da der Getränkeauslauf üblicherweise ein Eigengewicht aufweist, muss ein Haltemechanismus so stark sein, dass der Getränkeauslauf nicht von alleine nach unten rutschen kann. Hierfür können beispielsweise mechanische, oder wie in der DE 298 10 291 U1 offenbar, magnetische Rastvorrichtungen verwendet werden, die ein eigenmächtiges Herabrutschen vermeiden. Derartige mechanische bzw. magnetische Rastvorrichtungen sind jedoch konstruktiv aufwändig und erzeugen beim Verstellen des höhenverstellbaren Getränkeauslaufs ein unangenehmes Geräusch.

Die vorliegende Erfindung beschäftigt sich mit dem Problem, für einen Getränkeautomaten der gattungsgemäßen Art, eine verbesserte oder eine alternative Ausführungsform anzugeben, mit welcher insbesondere die Kundenzufriedenheit gesteigert werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, zur Höheneinstellung eines Getränkeauslaufes an einem Getränkeautomaten eine magnetische Rastvorrichtung mit zumindest zwei unterschiedlichen Rastlagen zu verwenden, wobei eine Dämpfereinrichtung zur Dämpfung der Verstellbewegung des Getränkeauslaufs vorgesehen ist. Bei einer derartigen magnetisch arbeitenden Rastvorrichtung wird eine jeweilige, den Getränkeauslauf fixierende Haltekraft, über Magnetfelder realisiert, deren Magnetkräfte beim Verstellen des höhenverstellbaren Getränkeauslaufs zunächst überwunden werden müssen. Im Gegensatz zu einer mechanisch arbeitenden Rastvorrichtung, vermittelt eine derartige magnetische Rastvorrichtung ein Gefühl der Wertigkeit und trägt somit wesentlich zu einer gesteigerten Kundenzufriedenheit bei. Darüber hinaus weist die magnetische Rastvorrichtung keinerlei mechanisch ineinander greifende Teile auf, die üblicherweise einer Abnutzung unterliegen. Aus diesem Grund kann mit der magnetischen Rastvorrichtung eine nahezu wartungsfreie Verstell-/Arretiermöglichkeit für den höhenverstellbaren Getränkeauslauf geschaffen werden. Darüber hinaus ist durch eine entsprechende Wahl der Größe der magnetischen Feldkräfte eine Verstell- bzw. Haltekraft nahezu frei wählbar. Gleichzeitig kann die Reibung mit der erfindungsgemäßen magnetischen Rastvorrichtung reduziert und dadurch ein relativ leichtgängiges Verstellen des Getränkeauslaufs ermöglicht werden. Von wesentlichem Vorteil dürfte darüber hinaus sein, dass bei einem Verstellen des Getränkeauslaufs zwischen zwei Rastlagen kein störendes mechanisches Klappergeräusch auftritt, wodurch dem Benutzer stets das Gefühl eines besonders hochwertigen Wirtschaftsgutes vermittelt wird.

Bei einer vorteilhaften Weiterbildung der erfindungsgemäßen Lösung, ist der höhenverstellbare Getränkeauslauf auf einem beweglichen Schlitten angeordnet, der an oder in einer getränkeautomatseitigen Führungsschiene gleitet, wobei an dem beweglichen Schlitten zumindest ein Magnet angeordnet ist, welcher mit an der Führungsschiene angeordneten Magneten oder magnetisierbaren Materialien zusammenwirkt. Denkbar ist hierbei, dass in dem Schlitten ein Permanentmagnet angeordnet ist, welcher mit in der Führungsschiene angeordneten Magneten oder magnetisierbaren Materialien zusammenwirkt. Durch die Wahl eines Abstandes zwischen den einzelnen an der Führungsschiene angeordneten Magneten bzw. magnetisierbaren Materialien, können unterschiedliche Rastlagen frei definiert werden. Um dabei einen Verstellvorgang zwischen zwei Rastlagen haptisch gut anzuzeigen, sind zwischen den jeweils an der Führungsschiene angeordneten Magneten oder magnetisierbaren Materialien üblicherweise keine magnetischen Materialien angeordnet, wodurch in diesem Bereich die Reibungskraft zusätzlich reduziert werden kann.

Erfindungsgemäß ist eine Dämpfereinrichtung zur Dämpfung der Verstellbewegung des Getränkeauslaufs vorgesehen. Eine derartige Dämpfereinrichtung verstärkt zusätzlich das von einem Nutzer empfundene Gefühl, sich einem qualitativ besonders hochwertigen Wirtschaftsgut gegenüber zu sehen. Derartige Dämpfereinrichtungen wurden zu Qualitätssteigerungszwecken erstmals Mitte der 80-iger Jahre in Kassettenrekordem eingesetzt, um eine Aufklappbewegung eines Kassettenfachdeckels zu dämpfen. Dabei war ein Einsatz zunächst nur in hochpreisigen Geräten geplant, wobei jedoch der Kundenwunsch nach einem breiten Einsatz derartiger Dämpfereinrichtungen auch bei vergleichsweise günstigen Kassettenrekordem dazu führte, dass innerhalb weniger Jahre nahezu sämtliche sich am Markt befindlichen Kassettenrekorder mit einer derartigen Dämpfereinrichtung ausgestattet wurden. Der Grund für das Kundenverlangen war hierbei ebenfalls das subjektive Empfinden, sich aufgrund der gedämpften Öffnungsbewegung des Kassettenfachdeckels einem qualitativ besonders hochwertigen Wirtschaftsgut gegenüber zu sehen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Prinzipdarstellung einer erfindungsgemäß an einem höhenverstellbaren Getränkeauslauf eingesetzten magnetischen Rastvorrichtung,
- Fig. 2: ein Kraft-Weg-Diagramm der in der Fig. 1 dargestellten magnetischen Rastvorrichtung.

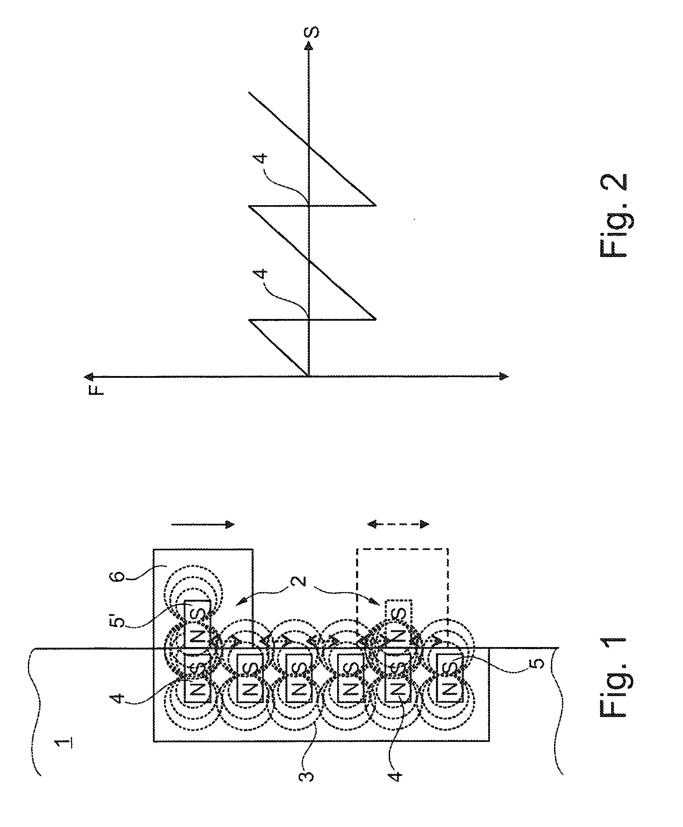

Entsprechend der Fig. 1, weist ein erfindungsgemäßer Getränkeautomat 1, welcher beispielsweise als Kaffeevollautomat ausgebildet sein kann, einen höhenverstellbaren Getränkeauslauf 2 dar, der gemäß der Fig. 1 mit durchgezogener Linie in einer oberen Position und mit unterbrochen gezeichneter Linie in einer weiter unten gelegenen Position gezeichnet ist. Um dabei eine Höhenverstellung des höhenverstellbaren Getränkeauslasses 2 einerseits manuell möglichst einfach realisieren zu können, andererseits jedoch eine zuverlässige Fixierung des Getränkeauslasses 2 in unterschiedlichen Höhenlagen erreichen zu können, ist erfindungsgemäß eine magnetische Rastvorrichtung 3 mit zumindest zwei Rastlagen 4 vorgesehen. Gemäß der Fig. 1 weist die erfindungsgemäße Rastvorrichtung 3 sogar insgesamt sechs Rastlagen 4 auf. Bestimmt werden dabei die Rastlagen 4 von Magneten 5, welche beispielsweise als Permanentmagneten oder als Elektromagneten ausgebildet sein können, und welche einem in dem höhenverstellbaren Getränkeauslass 2 angeordneten Magneten 5' bei einer eingenommenen Rastlage 4 gegenüberliegen.

Selbstverständlich ist dabei auch denkbar, dass lediglich im höhenverstellbaren Getränkeauslass 2 ein Magnet 5, 5' vorgesehen ist, während getränkeautomatenseitig lediglich magnetisierbare Materialien, beispielsweise Metalle, in definierten Abständen zueinander angeordnet sind, wobei selbstverständlich die Wirkung bei zwei sich gegenüberliegenden und umgekehrt gepolten Magneten 5, 5' deutlich größer ist. Der höhenverstellbare Getränkeauslauf 2 ist dabei auf einem beweglichen Schlitten 6 angeordnet, der an oder in einer nicht gezeigten und getränkeautomatenseitigen Führungsschiene gleitet. Um eine jeweilige Position unterschiedlicher Rastlagen 4 definieren zu können, ist zwischen den getränkeautomatenseitigen Magneten 5 jeweils ein definierter Abstand vorgesehen, in welchem keine magnetisierbaren Materialien, also beispielsweise Kunststoff, vorliegen, so dass ein Verrasten des höhenverstellbaren Getränkeauslaufs 2 zwischen zwei benachbarten Rastlagen 4 nicht möglich ist.

Mit der erfindungsgemäßen Rastvorrichtung 3 lässt sich der Getränkeauslauf 2 in mechanisch einfacher Weise entlang der jeweiligen Rastlagen 4 verstellen, wobei das Erreichen der jeweiligen Rastlage 4 jeweils haptisch angezeigt wird. Wird demnach der Schlitten 6 entlang den einzelnen Rastlagen 4 verschoben, so muss zunächst die Kraft des Magnetfeldes der ersten Rastlage überwunden werden, um den Schlitten 6 aus seiner Raststellung zu bewegen. Bei einem weiteren Verstellen wird der Magnet 5' vom nächstgelegenen Magneten 5 angezogen und dadurch die nächste Raststellung erreicht.

Mit der erfindungsgemäß magnetisch arbeitenden Rastvorrichtung 3 kann ein Gefühl beim Benutzer hervorgerufen werden, sich einem qualitativ besonders hochwertigen Wirtschaftsgut gegenüber zu sehen. Dieses Gefühl wird erfindungsgemäß dadurch verstärkt, dass eine nicht gezeigte Dämpfereinrichtung vorgesehen ist, die die Verstellbewegung des Getränkeauslaufs 2 dämpft. Ein weiterer großer Vorteil der erfindungsgemäßen magnetischen Rastvorrichtung 3 liegt darin, dass diese keinerlei einem Verschleiß unterliegende mechanische Teile, wie beispielsweise Rastnasen, aufweist und dadurch wartungs- und verschleißfrei über lange Zeit arbeiten kann. Darüber hinaus entsteht bei einem Verstellen des Getränkeauslaufs 2 auch kein lautes "Klack"-Geräusch beim Einnehmen einer Raststellung 4, was bei mechanischen Rastvorrichtungen oftmals als störend empfunden wird.

Gemäß der Fig. 2 ist ein Kraft-Weg-Diagramm dargestellt, welches die Verstellbewegung des höhenverstellbaren Getränkeauslaufes 2, das heißt des Schlittens 6, entlang den einzelnen Rastlagen 4 darstellt.

### Bezugszeichenliste

- 1: Getränkeautomat
- 2: Getränkeauslauf
- 3: Rastvorrichtung
- 4: Rastlage
- 5: Magnet
- 6: Schlitten

## Patentansprüche

1. Getränkeautomat (1), insbesondere ein Kaffeevollautomat, mit einem höhenverstellbaren Getränkeauslauf (2), wobei zur Höheneinstellung des Getränkeauslaufs (2) eine magnetische Rastvorrichtung (3) mit zumindest zwei Rastlagen (4) vorgesehen ist, **dadurch gekennzeichnet, dass** eine Dämpfereinrichtung zur Dämpfung der Verstellbewegung des Getränkeauslaufs (2) vorgesehen ist.

2. Getränkeautomat nach Anspruch 1,
**dadurch gekennzeichnet,**
**dass** der höhenverstellbare Getränkeauslauf (2) auf einem beweglichen Schotten (6) angeordnet ist, der an oder in einer getränkeautomatenseitigen Führungsschiene gleitet.

3. Getränkeautomat nach Anspruch 2,
**dadurch gekennzeichnet,**
**dass** an dem beweglichen Schlitten (6) zumindest ein Magnet (5') angeordnet ist, welcher mit an der Führungsschiene angeordneten Magneten (5) oder magnetisierbaren Materialien (5) zusammenwirkt, oder umgekehrt.

4. Getränkeautomat nach Anspruch 2 oder 3,
**dadurch gekennzeichnet,**
**dass** die an der Führungsschiene angeordneten Magneten (5) oder magnetisierbaren Materialien (5) in definierten Abständen zueinander angeordnet sind.

5. Getränkeautomat nach Anspruch 4,
**dadurch gekennzeichnet,**
**dass** in Verschieberichtung des Getränkeauslaufs (2) zwischen den an der Führungsschiene angeordneten Magneten (5) oder magnetisierbaren Materialien (5) nicht magnetische Materialien, wie beispielsweise Kunststoff, vorgesehen sind.

6. Getränkeautomat nach einem der Ansprüche 1 bis 5,
**dadurch gekennzeichnet,**
**dass** zumindest ein Magnet (5,5') als Elektromagnet oder als Permanentmagnet ausgebildet ist.

## Claims

1. Drinks machine (1), particularly a coffee machine, with a height-adjustable drinks outlet (2), wherein a magnetic detent device (3) with at least two detent positions (4) is provided for height setting of the drinks outlet (2), **characterised in that** a damping device is provided for damping the adjustment movement of the drinks outlet (2).

2. Drinks machine according to claim 1, **characterised in that** the height-adjustable drinks outlet (2) is arranged on a movable carriage (6), which slides at or in a guide rail at the drinks machine.

3. Drinks machine according to claim 2, **characterised in that** arranged at the movable carriage (6) is at least one magnet (5'), which co-operates with magnets (5) or magnetisable materials (5) arranged at the guide rails, or conversely.

4. Drinks machine according to claim 2 or 3, **characterised in that** the magnets (5) or magnetisable materials (5) arranged at the guide rail are arranged at defined spacings from one another.

5. Drinks machine according to claim 4, **characterised in that** non-magnetic materials such as, for example, plastics material are provided in the displacement direction of the drinks outlet (2) between the magnets (5) or magnetisable materials (5) arranged at the guide rail.

6. Drinks machine according to any one of claims 1 to 5, **characterised in that** at least one magnet (5, 5') is constructed as an electromagnet or as a permanent magnet.

## Revendications

1. Distributeur automatique de boissons (1), en particulier machine à café entièrement automatique, doté d'une buse à boisson (2) réglable en hauteur, dans lequel un dispositif d'encliquetage magnétique (3) comprenant au moins deux positions d'encliquetage (4) est prévu pour le réglage en hauteur de la buse à boisson(s), **caractérisé en ce qu'**il est prévu un dispositif amortisseur destiné à amortir le mouvement de réglage de la buse à boisson (2).

2. Distributeur automatique de boissons selon la revendication 1,
**caractérisé en ce que**
la buse à boisson (2) réglable en hauteur est disposée sur un coulisseau déplaçable (6) qui coulisse sur ou dans une coulisse de guidage côté distributeur automatique de boissons.

3. Distributeur automatique de boissons selon la revendication 2,
**caractérisé en ce que**
au moins un aimant (5') est disposé sur le coulisseau déplaçable (6), lequel coopère avec des aimants (5) ou matériaux aimantables (5) disposés sur la coulisse de guidage.

4. Distributeur automatique de boissons selon la revendication 2 ou 3,
**caractérisé en ce que**
les aimants (5) ou matériaux aimantables (5) disposés sur la coulisse de guidage sont disposés à des distances définies l'un par rapport à l'autre.

5. Distributeur automatique de boissons selon la revendication 4,
**caractérisé en ce que**
des matériaux non aimantables tels que le plastique sont prévus entre les aimants (5) ou matériaux aimantables (5) disposés sur la coulisse de guidage, dans le sens de déplacement de la buse à boisson (2).

6. Distributeur automatique de boissons selon l'une des revendications 1 à 5,
**caractérisé en ce que**
au moins un aimant (5, 5') est conçu comme électroaimant ou comme aimant permanent.
